# EUROPEAN PATENT APPLICATION

(11) **EP 2 194 393 A2**
(43) Date of publication of application: **09.06.2010**
(21) Application number: 09014849.5
(22) Date of filing: 30.11.2009
(51) Int. Cl.: G01S 1/00

(54) **Method and system for a single RF front-end for GPS, Galileo, and Glonass**

(30) Priority: 04.12.2008 US 328612
(71) Applicant: Broadcom Corporation, Irvine, CA 92617 (US)
(72) Inventor: Rodal, Eric, Gardnerville, NV 89460 (US)
(74) Representative: Jehle, Volker Armin

(57) **Abstract**

A wireless receiver receives satellite signals from a plurality of different satellite systems comprising GPS, GLONASS, and GALILEO. A single analog RF front-end is used to process the received satellite signals. The single analog RF front-end uses a single fix-valued analog frequency generated internally for simultaneously receiving the satellite signals comprising signals from a GPS frequency band, a GLONASS frequency band, and/or a GALILEO frequency band. The received satellite signals are separated into single frequency band signals within the GPS frequency band, the GLONASS frequency band, and/or the GALILEO band. Particular satellite channels associated with the single frequency band signals are determined based on corresponding satellite channel frequencies and satellite channel codes. The single analog RF front-end filters the received satellite signals to generate an upper sideband signal comprising signals within the GLONASS bands and a lower sideband signal comprising signals within the GPS bands and/or the GALILEO bands.

## Description

### CROSS-REFERENCE TO RELATED APPLICATIONS/INCORPORATION BY

### REFERENCE

NOT APPLICABLE.

### FIELD OF THE INVENTION

Certain embodiments of the invention relate to communication systems. More specifically, certain embodiments of the invention relate to a method and system for a single RF front-end for GPS, GLONASS, and GALILEO.

### BACKGROUND OF THE INVENTION

The Global Positioning System (GPS), the Global Orbiting Navigation Satellite System (GLONASS), and the satellite navigation system GALILEO are three examples of Global Navigation Satellite Systems (GNSSs). GNSS is based on an earth-orbiting constellation of a plurality of satellites each broadcasting its precise location and ranging information. From any location on or near the earth, GNSS receivers may normally determine their position by receiving satellite broadcast signals from a plurality of satellites.

GPS satellites transmit L-band carrier signals continuously in two frequency bands, L1 band (1575.42MHz) and L2 band (1227.60MHz), respectively. The GPS satellites transmit GPS signals using code division multiple access (CDMA) technique that transmits different GPS codes on same frequency. The unique content of each GPS code is used to identify the source of a received signal.

GALILEO satellites share frequency bands with GPS satellites. The GALILEO satellites continuously broadcast L-band carrier signals in four frequency bands such as E1 (1575.75 MHz), E6 (1278.750 MHz), E5 (1191.795 MHz), E5b (1205.140 MHz), and E5a (1176.450 MHz). In some cases, GALILEO signals are overlapping with GPS signals. Like GPS satellites, GALILEO satellites transmit GALILEO signals using CDMA signals that transmit different CDMA codes on the same frequency.

GLONASS satellites transmit L-band carrier signals in two frequency bands, L1 band and L2 band, respectively. The GLONASS satellites transmit the same code as their L1 band signal, however each transmits on a different frequency using a 21-channel frequency division multiple access (FDMA) technique spanning from 1598.0625 MHz to 1609.3125 MHz. The relationship (1602 + n × 0.5625) MHz is utilized to determine the exact center frequency, where n is a satellite's frequency channel number (n=-7, -6, -5, ..., 13). The L2 signals use the same FDMA technique, but transmit between 1242.9375 MHz and 1251.6875 MHz. The relationship (1246 + n × 0.4375) MHz is utilized to determine the center frequency of the L2 signals, where n is a satellite's frequency channel number (n=-7, -6, -5, ..., 13).

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for a single RF front-end for GPS, GLONASS, and GALILEO, substantially as shown in and/or described in connection with at least one of the figures, as set forth more completely in the claims.

According to an aspect, a method for communication comprises:
processing satellite signals received from a plurality of different satellite systems utilizing a single analog radio frequency front-end in a receiver.

Advantageously, the method further comprises generating within said receiver, a single frequency analog signal, which is utilized by said analog radio frequency front-end to enable receiving of said satellite signals.

Advantageously, said single frequency analog signal comprises a frequency having a fixed value.

Advantageously, said single frequency analog signal comprises a frequency that is within one of a GPS frequency band, a GLONASS frequency band, and a GALILEO frequency band.

Advantageously, said satellite signals comprise signals within a GPS frequency band, a GLONASS frequency band, and/or GALILEO frequency band.

Advantageously, the method further comprises separating said satellite signals into one or more single frequency band signal within said GPS frequency band, said GLONASS frequency band, and/or said GALILEO band.

Advantageously, the method further comprises determining a particular satellite channel corresponding to said one ore more single frequency band signal based on a corresponding satellite channel frequency and/or satellite channel code.

Advantageously, the method further comprises filtering said satellite signals to generate an upper sideband signal comprising a GLONASS frequency band signal.

Advantageously, the method further comprises filtering said satellite signals to generate lower sideband signal comprising a GPS frequency band signal.

Advantageously, the method further comprises filtering said satellite signals to generate lower sideband signal comprising a GALILEO frequency band signal.

According to an aspect, a system for communication comprises:
one or more circuits comprising a single analog radio frequency front-end in a receiver, wherein said one or more circuits are operable to process satellite signals received from said plurality of different satellite systems utilizing said single analog radio frequency front-end in said receiver.

Advantageously, said one or more circuits are operable to generate within said receiver, a single frequency analog signal, which is utilized by said analog radio frequency front-end to enable receiving of said satellite signals.

Advantageously, said single frequency analog signal comprises a frequency having a fixed value.

Advantageously, said single frequency analog signal comprises a frequency that is within one of a GPS frequency band, a GLONASS frequency band, and a GALILEO frequency band.

Advantageously, said satellite signals comprise signals within a GPS frequency band, a GLONASS frequency band, and/or GALILEO frequency band.

Advantageously, said one or more circuits are operable to separate said satellite signals into one or more single frequency band signal within said GPS frequency band, said GLONASS frequency band, and/or said GALILEO band.

Advantageously, said one or more circuits are operable to determine a particular satellite channel corresponding to said one ore more single frequency band signal based on a corresponding satellite channel frequency and/or satellite channel code.

Advantageously, said one or more circuits are operable to filter said satellite signals to generate an upper sideband signal comprising a GLONASS frequency band signal.

Advantageously, said one or more circuits are operable to filter said satellite signals to generate lower sideband signal comprising a GPS frequency band signal.

Advantageously, said one or more circuits are operable to filter said satellite signals to generate lower sideband signal comprising a GALILEO frequency band signal.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary wireless receiver that utilizes a single analog RF front-end for processing GPS, GLONASS, and GALILEO signals, in accordance with an embodiment of the invention.

FIG. 2 is a block diagram illustrating an exemplary RF module that may be used in a wireless receiver that utilizes a single analog RF front-end for processing GPS, GLONASS, and GALILEO signals, in accordance with an embodiment of the invention.

FIG. 3 is a block diagram illustrating an exemplary analog IF module that may be used in a wireless receiver that utilizes a single analog RF front-end for processing GPS, GLONASS, and GALILEO signals, in accordance with an embodiment of the invention.

FIG. 4 is a block diagram illustrating an exemplary digitizing module that may be used in a wireless receiver that utilizes a single RF front-end for processing GPS, GLONASS, and GALILEO signals, in accordance with an embodiment of the invention.

FIG. 5 is a block diagram illustrating an exemplary satellite channel select module that may be used in a wireless receiver that utilizes a single RF front-end for processing GPS, GLONASS, and GALILEO signals, in accordance with an embodiment of the invention.

FIG. 6 is a block diagram illustrating an exemplary baseband module that may be used in a wireless receiver that utilizes a single RF front-end for processing GPS, GLONASS, and GALILEO signals, in accordance with an embodiment of the invention.

FIG. 7 is a flow chart illustrating exemplary steps for receiving and processing satellite signals from a plurality of different navigation satellite systems utilizing a single analog RF front-end, in accordance with an embodiment of the invention.

### DETAILED DESCRIPTION OF THE INVENTION

Certain embodiments of the invention may be found in a method and system for a single RF front-end for GPS, GLONASS, and GALILEO. In accordance with various embodiments of the invention, a wireless receiver may receive satellite signals from a plurality of different satellite systems comprising GPS, GLONASS, and GALILEO. The wireless receiver may use a single analog RF front-end to process the received satellite signals. The single analog RF front-end may comprise a low noise amplifier (LNA), a RF module, and/or an analog IF module. The single analog RF front-end may use a single analog frequency generated internally in the RF module for simultaneously receiving signals of desired channels within a GPS frequency band, a GLONASS frequency band, and/or a GALILEO frequency band. The generated single analog frequency has a fixed value and may be selected in between the frequency GPS band, the GLONASS frequency band, and/or the GALILEO frequency band of interest.

The received satellite signals may comprise signals from various satellite bands such as, for example, the GPS frequency band, the GLONASS frequency band, and/or the GALILEO frequency band. The received satellite signals may be separated into one or more single frequency band signals using a GPS digital IF filter, a GLONASS digital IF filter, and/or a GALILEO digital IF filter, respectively. The resulting outputs of the GPS digital IF filter, the GLONASS digital IF filter, and/or the GALILEO digital IF filter correspond to digitized baseband signals within the GPS frequency band, the GLONASS frequency band, and/or the GALILEO frequency band, respectively. A particular satellite channel corresponding to a digitized baseband signal may be determined based on a corresponding satellite channel frequency and a satellite channel code, respectively. The RF module may be configured to filter the received satellite signals to generate an upper sideband signal and a lower sideband signal, respectively. The upper sideband signal comprises signals within the GLONASS frequency band. The lower sideband signal comprises signals within the GPS frequency band and/or the GALILEO frequency band, respectively.

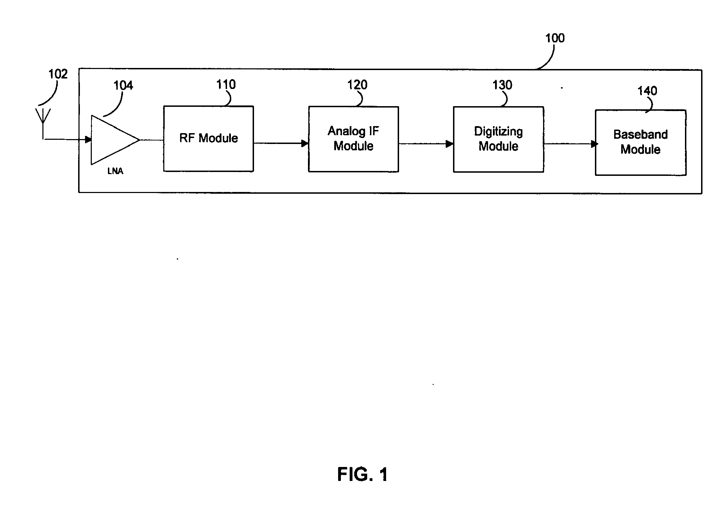

FIG. 1 is a block diagram illustrating an exemplary wireless receiver that utilizes a single analog RF front-end for processing GPS, GLONASS, and GALILEO signals, in accordance with an embodiment of the invention. Referring to FIG. 1, there is shown a wireless receiver 100 comprising an antenna 102, a low noise amplifier (LNA) 104, a radio frequency (RF) module 110, an analog intermediate frequency (IF) module 120, a digitizing module and a baseband module 140.

The antenna 102 may comprise suitable logic, circuitry and/or code that are operable to receive various satellite signals in the L bands from a plurality of satellites. The received satellite signals are communicated from the antenna 102 to the RF module 110 for processing. In this regard, the antenna 102 may be operable to receive satellite signals from a plurality of different satellite systems. For example, the antenna 102 may be configured and/or tuned so as to receive the GPS signals, the GLONASS signals, and/or the GALILEO signals simultaneously. Although the single antenna 102 is illustrated in FIG.1, the invention may not be so limited. Accordingly, one or more antennas may be utilized for receiving satellite signals from a plurality of different satellite systems by the wireless receiver 100 without departing from the spirit and scope of various embodiments of the invention. For example, in one embodiment of the invention, each of the GPS signals, the GLONASS signals, and/or the GALILEO signals may be received by a separate antenna. In another embodiment of the invention, each of the GPS signals, the GLONASS signals, and/or the GALILEO signals may share one or more antennas.

The LNA 104 may comprise suitable logic, circuitry and/or code that are operable to amplify signals received by the antenna 102. The LNA 104 may enable low noise performance, which may be crucial for a high performance radio frequency (RF) front end.

The RF module 110 may comprise suitable logic, circuitry and/or code that are operable to retrieve signals received by the antenna 102. The RF module 110 may be operable to translate desired spectral portions of received signals into an upper sideband and/or a lower sideband, respectively. Channels to be received by the RF module 110 may be determined based on corresponding local frequencies used for signal downconversion at the RF module 110. In this regard, the RF module 110 may be operable to tune to satellite signals from a plurality of different satellite systems by using a fixed single local frequency. The satellite signals from the plurality of different satellite systems may comprise GPS signals, GLONASS signals, and/or GALILEO signals. The fixed single local frequency may be located between GPS bands, GLONASS bands, and/or GALILEO bands of interest. For example, for a GPS band of 1574.42∼1576.42 MHz, a GLONASS band of 1597.62∼1605.62 MHz, and a GALILEO band of 1573.42∼1577.42 MHz, a fixed single local frequency around 1566.62 MHz may be selected. In addition, the RF module 110 may be configured to locate contents of GLONASS bands in the upper sideband and contents of both GPS bands and GALILEO bands may be located in the lower sideband.

The analog IF module 120 may comprise suitable logic, circuitry and/or code that are enabled to communicate contents of desired channels from the upper sideband and/or the lower sideband of the RF module 110. The analog IF module 120 is operable to provide approximately equal signal power to the digitizing module 130 under various received signal strength conditions. In this regard, the analog IF module 120 may be configured so that it is operable to provide approximately equal power to the digitizing module 130 for contents of desired channels from the upper sideband and/or the lower sideband of the output of the RF module 110.

The digitizing module 130 may comprise suitable logic, circuitry and/or code that are operable to convert signal from the analog domain to the digital domain. Typically, the digitizing module 130 may convert the received signal from an analog waveform to a digital signal (e.g., bytes) having values representative of the analog waveform amplitude. In this regard, the digital signal may be split into various frequency band specific digital signals such as, for example, GPS band digital signals, GLONASS band digital signals, and/or GALILEO band digital signals. The various frequency band specific digital signals may be passed to the baseband module 140 for baseband processing.

The baseband module 140 may comprise suitable logic, circuitry and/or code that are operable to process digitized frequency band specific baseband signals from the digitizing module 130 to extract the information and data bits conveyed in the received signal. The baseband module 140 may perform exemplary operations comprising demodulation, decorrelation, decoding, and error correction. In this regard, the baseband module 140 may be operable to determine particular satellite channels of each received frequency band specific signals from the digitizing module 130 based on, for example, unique channel codes and unique channel frequencies.

In operation, satellite signals received from the plurality of different satellite systems may comprise GPS signals, GLONASS signals, and GALILEO signals, may be received simultaneously by the antenna 102. The LNA 104 may be enabled to amplify the received satellite signals and communicate them to the RF module 110 for further processing. The RF module 110 may be enabled to utilize a fixed single local frequency to process the corresponding received satellite signals in the GPS bands, the GLONASS bands, and/or the GALILEO bands. The fixed single local frequency may be located somewhere in between various GPS bands, GLONASS bands, and/or GALILEO bands. The RF module 110 may be enabled to locate contents of GLONASS bands in the upper sideband and contents of both GPS bands and GALILEO bands in the lower sideband, respectively. The RF module 110 may be operable to extract the contents in GLONASS bands from an upper sideband of the satellite signals received from the plurality of different satellite systems. The RF module 110 may be operable to extract the contents in the GPS bands and the GALILEO bands from a lower sideband of the satellite signals received from the plurality of different satellite systems, respectively.

The analog IF module 120 is operable to receive the contents of desired channels from the upper sideband and/or the lower sideband of the GPS signals, GLONASS signals, and/or GALILEO signals, which are generated from the output of the RF module 110. The digital module 130 is operable to receive and convert the contents from the upper and/or lower sideband signal generated by the analog IF module 120 to corresponding digital signals. The digital signals may be further separated into frequency band specific digital signals such as, for example, GPS band digital signals, GLONASS band digital signals, and/or GALILEO band digital signals, via digital IF filtering. The frequency band specific digital signals may be communicated with the baseband module 140. The baseband module 140 may be enabled to determine particular satellite channels for the received satellite signals and perform various baseband operations such as, for example, demodulation and decoding.

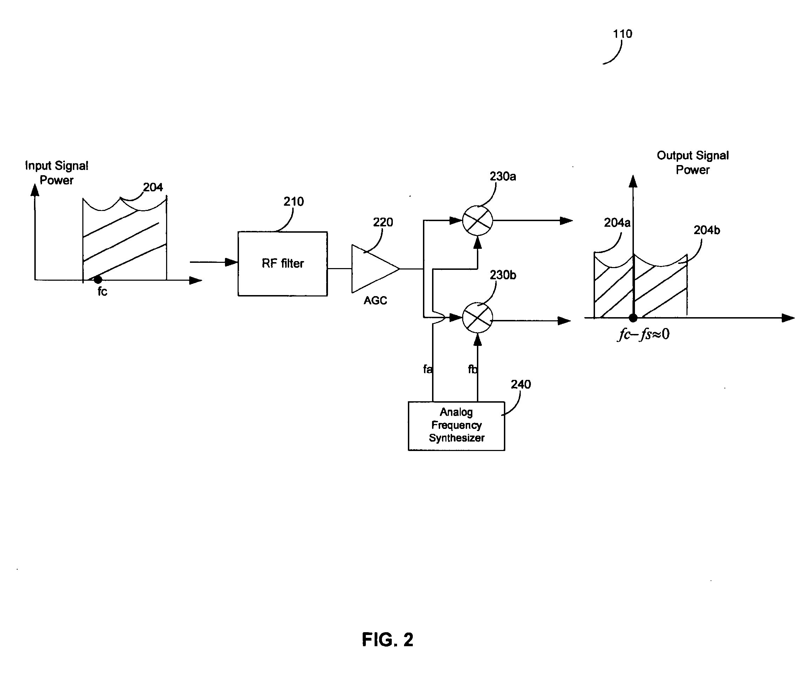

FIG. 2 is a block diagram illustrating an exemplary RF module that may be used in a wireless receiver that utilizes a single analog RF front-end for processing GPS, GLONASS, and GALILEO signals, in accordance with an embodiment of the invention. Referring to FIG. 2, there is shown a RF module 110 comprising a RF filter 210, an automatic gain control (AGC) 220, mixers 230a-230b, and an analog frequency synthesizer 240. Signals 204, 204a, and 204b may represent input signal and output signals of the RF module 110, respectively.

The RF filter 210 may comprise suitable logic, circuitry and/or code that are operable to retrieve contents of a channel received by the antenna 102. The RF filter 210 is typically a bandpass filter to pass frequencies approximate to carrier frequencies of particular GPS bands, GLONASS bands, and/or GALILEO bands being received. In this regard, the RF filter 210 may comprise a passband corresponding to the spectral portion wide enough for GPS bands, GLONASS bands, and/or GALILEO bands.

The AGC 220 may comprise suitable logic, circuitry and/or code that are operable to amplify desired spectral portions that are passed by the RF filter 210. In this regard, the single AGC 220 is used for adjusting signal spectral portions from GPS bands, GLONASS bands, and/or GALILEO bands.

The mixers 230a-230b may comprise suitable logic, circuitry and/or code that are operable to multiply the amplified signals from the AGC 220 with a pair of signals from the analog frequency synthesizer 240. The pair of signals from the analog frequency synthesizer 240 may have the same frequency and a 90 degree phase difference with respect to one another.

The analog frequency synthesizer 240 may comprise suitable logic, circuitry and/or code that are operable to generate analog local frequencies suitable for receiving information along more than one carrier frequency. The generated analog local frequencies may be used to downconvert received signals in desired channels to intermediate frequencies, for example. In this regard, the analog frequency synthesizer 240 may generate a fixed single local frequency (fs) for receiving satellite signals 204 from GPS bands, GLONASS band, and/or GALILEO bands. The fixed single local frequency (fs) may be chosen so that it is somewhere in between GPS bands, GLONASS bands, and GALILEO bands. In addition, the analog frequency synthesizer 240 may generate a pair of downconversion signals (fa, fb) used to receive analog signals within GPS bands, GLONASS bands, and/or GALILEO bands. The pair of downconversion signals (fa, fb) may comprise a frequency that is equal to fs and have a phase difference of 90 degrees with respect to one another.

In operation, satellite signals such as 204, which are received from the plurality of different satellite systems may be received at the antenna 102, and may be filtered by the RF filter 210 having a spectral passband wide enough for GPS bands, GLONASS bands, and/or GALILEO bands, respectively. The output of the RF filter 210 may be amplified via the AGC 220. The output of the AGC 220 may be mixed with the pair of downconversion signals (fa, fb) from the analog frequency synthesizer 240 and translated into an upper sideband signal and a lower sideband signal such as 204a and 204b, respectively.

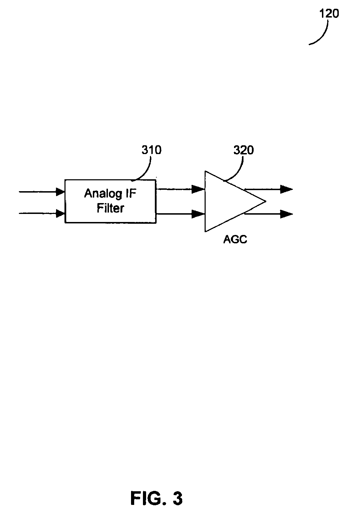

FIG. 3 is a block diagram illustrating an exemplary analog IF module that may be used in a wireless receiver that utilizes a single analog RF front-end for processing GPS, GLONASS, and GALILEO signals, in accordance with an embodiment of the invention. Referring to FIG. 3, there is shown an analog IF module 120 comprising an analog IF filter 310 and an automatic gain control (AGC) 320.

The analog IF module 310 may comprise suitable logic, circuitry and/or code that are operable to communicate the contents of desired channels from the RF module 110 and provide approximately equal signal power to the digitizing module 130 under various received signal strength conditions. In this regard, the analog IF filter 310 may be tailored to pass the contents from the lower sideband and the upper sideband of RF module 110, respectively. The passband of the analog IF module 310 may be characterized by its center frequency and/or its bandwidth. The center frequency for the passband of the analog IF filter 310 may correspond to an approximate intermediate frequency for contents of desired channels within the GPS bands, the GLONASS bands, and the GALILEO bands simultaneously. The bandwidth of the analog IF filter 310 may have a spectral width approximately equal to the width of the desired channels.

The AGC 320 may comprise suitable logic, circuitry and/or code that are operable to adjust signal power of an output of the analog IF filter 310. The AGC 320 may be operable to provide approximately equal signal power to the digitizing module 130 for contents of desired channels within GPS bands, GLONASS bands, and GALILEO bands, respectively.

In operation, the analog IF module 310 may be operable to bandpass the contents from both the upper sideband and the lower sideband of the RF module 110, respectively. The contents from the upper and lower sidebands may be amplified approximately equally via the AGC 320. The resulted outputs may be communicated with the digitizing module 130.

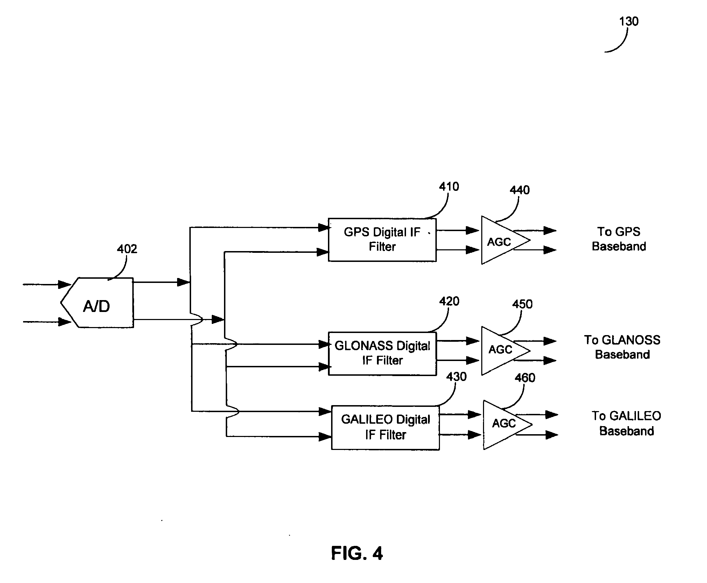

FIG. 4 is a block diagram illustrating an exemplary digitizing module that may be used in a wireless receiver that utilizes a single RF front-end for processing GPS, GLONASS, and GALILEO signals, in accordance with an embodiment of the invention. Referring to FIG. 4, there is shown a digitizing module 130 comprising an analog-to-digital conversion (A/D) 402, a GPS digital IF filter 410, a GLONASS digital IF filter 420, a GALILEO digital IF filter, and AGC 440-460.

The A/D 402 may comprise suitable logic, circuitry and/or code that are operable to convert received analog signals from the analog IF module 120 to a series of digital data (e.g., bytes) having values representative of the signal amplitude.

The GPS digital IF filter 410 may comprise suitable logic, circuitry and/or code that are operable to pass contents of desired channels within GPS bands. The output of the GPS digital IF filter 410 may be communicated to the AGC 440 for power adjustment.

The GLONASS digital IF filter 420 may comprise suitable logic, circuitry and/or code that are operable to pass contents of desired channels within GLONASS bands. The output of the GLONASS digital IF filter 420 may be passed to the AGC 450 for power adjustment.

The GALILEO digital IF filter 430 may comprise suitable logic, circuitry and/or code that are operable to pass contents of desired channels within the GALILEO frequency bands. The output of the GALILEO digital IF filter 430 may be communicated to the AGC 460 for power adjustment.

The AGC 440-460 may comprise suitable logic, circuitry and/or code that are operable to adjust signal power of the output of the GPS digital IF filter 410, the GLONASS digital IF filter 420, and/or the GALILEO digital IF filter 430. The outputs of the AGC 440-460 may be passed to the baseband module 140 for corresponding baseband processing.

In operation, the A/D 402 may be enabled to convert received analog signals from the analog IF module 120 to corresponding digital signals. Contents of desired channels within the GPS bands, the GLONASS bands, and GALILEO bands may be filtered via the GPS digital IF filter 410, the GLANOSS digital IF filter 420, and the GALILEO digital IF filter 430, respectively. The resulted outputs may be communicated to the AGC 440, the AGC 450, and the AGC 460, respectively, for power adjustment.

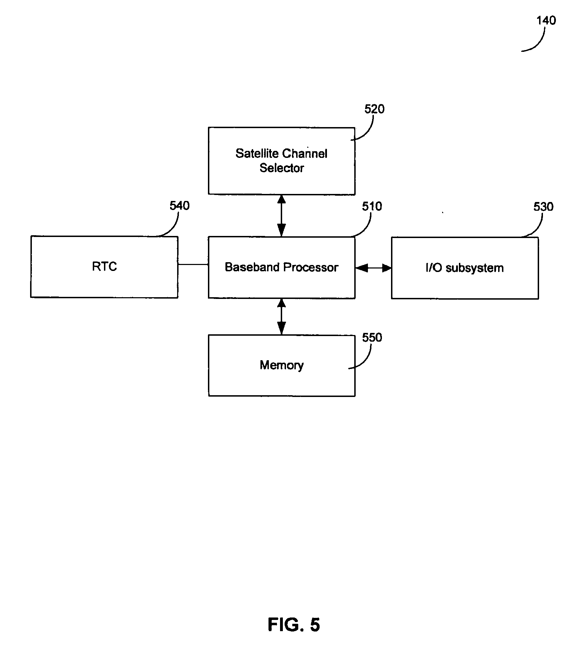

FIG. 5 is a block diagram illustrating an exemplary satellite channel select module that may be used in a wireless receiver that utilizes a single RF front-end for processing GPS, GLONASS, and GALILEO signals, in accordance with an embodiment of the invention. Referring to FIG. 5, there is shown a baseband module 500 comprising a baseband processor 510, a satellite channel selector 520, an I/O subsystem 530, a real-time clock (RTC) 540, and a memory 550.

The baseband processor 510 may comprise suitable logic, circuitry and/or code that are operable to process baseband signals from the digitizing module 130 to extract the information and data bits conveyed in corresponding received satellite signals. The baseband processor 510 may perform various baseband operations such as demodulation, decorrelation, decoding, and error correction. Moreover, the baseband processor 510 may be operable to calculate navigation solutions of the wireless receiver 100 based on extracted information from the received satellite signals. The baseband processor 510 is operatively connected to the satellite channel selector 520, the I/O subsystem 530, the RTC 540, and the memory 550.

The satellite channel selector 520 may comprise suitable logic, circuitry and/or code that are operable to determine satellite channels associated with each baseband signals from the digitizing module 130. The satellite channel selector 520 may communicate satellite channel information with the baseband processor 510 to process baseband signals particular to the satellite channel information.

The I/O subsystem 530 may comprise suitable logic, circuitry and/or code that enable the baseband processor 510 to communicate calculated navigation solutions of the wireless receiver 100 with external devices such as, for example, location measurement units, display devices, for various location based services and/or applications such as Enhanced 911 ("E911").

The RTC 540 may comprise suitable logic, circuitry and/or code that are operable to provide real-time clock (RTC) information to the baseband processor 510 to assist in, for example, position or location calculations performed by the baseband processor 510.

The memory 550 may comprise suitable logic, circuitry and/or code that may enable storage of programs instructions to be executed by the baseband processor 510. For example, various algorithms used for calculating navigation solutions of the wireless receiver 100. The memory 550 may also store GPS, GLONASS, and GALILEO related data such as ephemeris data, almanac data, last known position which may be used by the baseband processor 510 for various position calculations.

In operation, satellite channel information for the signals from the digitizing module 130 may be evaluated by the satellite channel selector 520. Particular satellite channel corresponding to the received signals may be determined. The baseband processor 510 may perform various baseband operations such as demodulation and error correction to extract, for example, navigation data, from corresponding baseband signals based on the satellite channel information received from the satellite channel selector 520. The baseband processor 510 may calculate navigation information such as a position of the wireless receiver 100 based on the extracted baseband data. Various algorithms stored in the memory 550 may be utilized by the baseband processor 510 to calculate navigation information for the wireless receiver 100 with assistance of the real-time information provided by the RTC 540. The calculated navigation information may be used for various location based applications and/or services via the I/O subsystem 530.

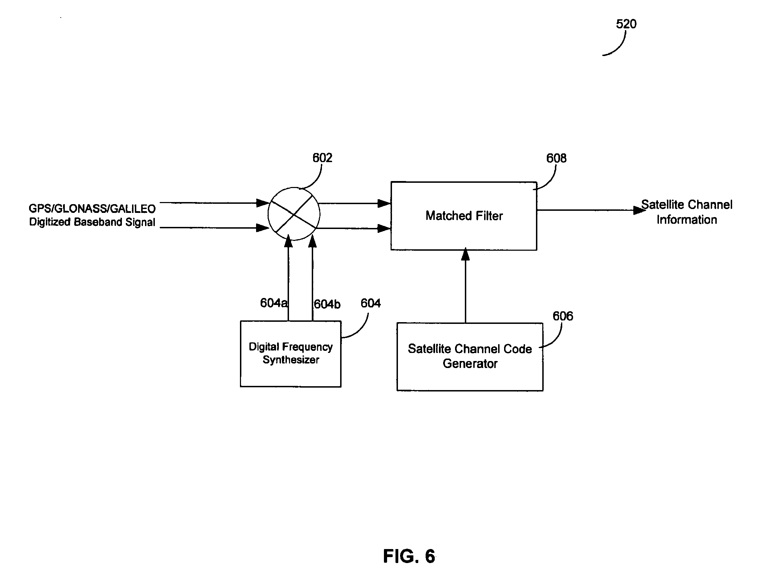

FIG. 6 is a block diagram illustrating an exemplary baseband module that may be used in a wireless receiver that utilizes a single RF front-end for processing GPS, GLONASS, and GALILEO signals, in accordance with an embodiment of the invention. Referring to FIG. 6, there is shown a multi-satellite system channel selector 520 comprising a mixer 602, a digital frequency synthesizer 604, a satellite channel code generator 606, and a matched filter 608.

The mixer 602 may comprise suitable logic, circuitry and/or code that are operable to multiply the signals from the digital module 130 with a pair of digitally generated local frequency signals from the digital frequency synthesizer 604.

The digital frequency synthesizer 604 may comprise suitable logic, circuitry and/or code that are operable to generate digital local frequencies suitable for receiving information along more than one carrier frequency. In this regard, the digital frequency synthesizer 604 may generate multiple digital local frequencies suitable for receiving satellite signals, from the plurality of different satellite systems, from the digitizing module 130. The generated multiple digital local frequencies may range from 0∼20MHz, for example, to cover various satellite channels within the GPS bands, the GLONASS band, and/or the GALILEO bands. Each satellite channel may correspond to a unique digital local frequency within the generated frequency range. In addition, the digital frequency synthesizer 604 may generate a pair of signals 604a and 604b for receiving digitized signals within GPS bands, GLONASS bands, and/or GALILEO bands. The pair of signals 604a and 604b may have the same or approximately the same frequency and have a phase difference of 90 degrees with respect to one another.

The satellite channel code generator 606 may comprise suitable logic, circuitry and/or code that may enable generating satellite channel codes such as C/A codes and/or P-codes. The generated satellite channel codes may be used to identify particular satellite channels such as, GPS channels, GLONASS channels, and/or GALILEO channels.

The matched filter 608 may comprise suitable logic, circuitry and/or code that may be operable to match incoming signals from the mixer 602 with the generated satellite channel codes from the satellite channel code generator 606. Correlation between the incoming signals and each of the generated satellite channel codes may be calculated. A particular satellite channel may be determined based on the calculated correlation, accordingly.

In operation, digitized satellite baseband signals such as signals from the digitizing module 130 may be mixed with a pair of channel specific signals from the digital frequency synthesizer 604. The mixed signals may be correlated with satellite channel codes generated by the satellite channel code generator 606. A particular satellite channel may be determined based on the calculated correlation values. For example, the determined particular satellite channel may correspond to a maximum calculated correlation value at the matched filter 608.

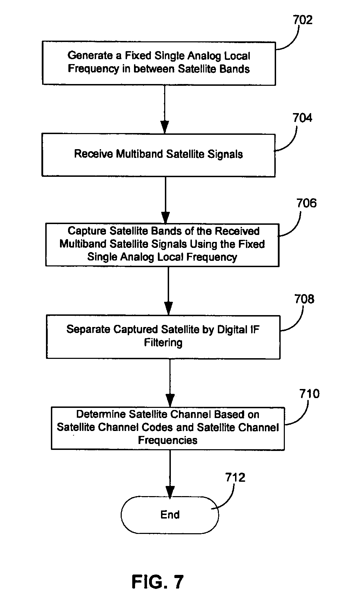

FIG. 7 is a flow chart illustrating exemplary steps for receiving and processing satellite signals from a plurality of different navigation satellite systems utilizing a single analog RF front-end, in accordance with an embodiment of the invention. Referring to FIG. 7, the exemplary steps begin with step 702, where a single analog local frequency, fs, may be generated by the analog frequency synthesizer 240. The generated fs may be used for receiving satellite signals within GPS bands, GLONASS band, and/or GALILEO bands, simultaneously. The fs may have a fixed value and may be chosen in between GPS bands, GLONASS band, and/or GALILEO bands, respectively. In step 704, the wireless receiver 100 may receive satellite signals from a plurality of different satellite systems via the antenna 102. In step 706, the wireless receiver 100 may be enabled to capture satellite bands of the satellite signals received from the plurality of different satellite systems using the fixed single analog local frequency, fs. As described in FIG.2, the RF module 110 may be enabled to capture GLONASS bands in the upper sideband and to capture GPS bands and GALILEO bands in the lower sideband. Moreover, the analog IF filter 310 may be configured such that the contents of desired channels within the captured GPS bands, GLONASS bands, and/or GALILEO bands may pass through IF filter 310. In step 708, the captured GPS bands, GLONASS bands, and/or GALILEO bands may be separated, as described in FIG.3, by using digital IF filtering via the digitizing module 130. In step 710, a particular satellite channel may be determined based on satellite channel frequencies and/or satellite channel codes as presented in FIG.6.

Aspects of a method and system for a single RF front-end for GPS, GLONASS, and GALILEO are provided. In accordance with various embodiments of the invention, satellite signals such as 204, which are received from a plurality of different satellite systems, may be received from GPS satellites, GLONASS satellites, and GALILEO satellite simultaneously by the wireless receiver 100 via the antenna 102. The wireless receiver 100 may use a single analog RF front-end to process the satellite signals that are received from the plurality of different satellite systems. The single analog RF front-end may comprise the LNA 104, the RF module 110 and/or the analog IF module 120, respectively. The single analog RF front-end may use a single analog frequency generated by the analogy synthesizer 240 in the RF module 110 for simultaneously receiving signals of desired channels within a GPS frequency band, a GLONASS frequency band, and/or a GALILEO frequency band. The generated single analog frequency has a fixed value and may be selected in between the GPS frequency band, the GLONASS frequency band, and/or the GALILEO frequency band of interest. The received satellite signals that are received from the plurality of different satellite systems may comprise signals from various satellite bands such as, for example, the GPS frequency band, the GLONASS frequency band, and/or the GALILEO frequency band. The received satellite signals 204, which are received from the plurality of different satellite systems, may be separated into one or more single band signals within the GPS frequency band, the GLONASS frequency band, and/or the GALILEO frequency band via using the GPS digital IF filter 410, the GLONASS digital IF filter 420, and/or the GALILEO digital IF filter 430, respectively. The resulting outputs of the GPS digital IF filter 410, the GLONASS digital IF filter 420, and/or the GALILEO digital IF filter 430 correspond to digitized baseband signals within the GPS frequency band, the GLONASS frequency band, and/or the GALILEO frequency band, respectively, as presented in FIG. 5. A particular satellite channel corresponding to a digitized baseband signal may be determined, as described in FIG. 6, based on a corresponding satellite channel frequency from the digital frequency synthesizer 604 and a satellite channel code generated by the satellite channel code generator 606, respectively. As described in FIG.2, the RF module 110 may be configured to filter the satellite signals, which are received from the plurality of different satellite systems, to generate an upper sideband signal such as 204b and a lower sideband signal such as 204a, respectively. The upper sideband signal such as 204b may comprise signals within the GLONASS frequency band. The lower sideband signal such as 204a may comprise signals within the GPS frequency band and/or the GALILEO frequency band, respectively.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a single RF front-end for GPS, GLONASS, and GALILEO.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
processing satellite signals received from a plurality of different satellite systems utilizing a single analog radio frequency front-end in a receiver.

2. The method according to claim 1, comprising generating within said receiver, a single frequency analog signal, which is utilized by said analog radio frequency front-end to enable receiving of said satellite signals.

3. The method according to claim 2, wherein said single frequency analog signal comprises a frequency having a fixed value.

4. The method according to claim 2, wherein said single frequency analog signal comprises a frequency that is within one of a GPS frequency band, a GLONASS frequency band, and a GALILEO frequency band.

5. The method according to claim 1, wherein said satellite signals comprises signals within a GPS frequency band, a GLONASS frequency band, and/or GALILEO frequency band.

6. The method according to claim 5, comprising separating said satellite signals into one or more single frequency band signal within said GPS frequency band, said GLONASS frequency band, and/or said GALILEO band.

7. A system for communication, the system comprising:
one or more circuits comprising a single analog radio frequency front-end in a receiver, wherein said one or more circuits are operable to process satellite signals received from said plurality of different satellite systems utilizing said single analog radio frequency front-end in said receiver.

8. The system according to claim 7, wherein said one or more circuits are operable to generate within said receiver, a single frequency analog signal, which is utilized by said analog radio frequency front-end to enable receiving of said satellite signals.

9. The system according to claim 8, wherein said single frequency analog signal comprises a frequency having a fixed value.

10. The system according to claim 8, wherein said single frequency analog signal comprises a frequency that is within one of a GPS frequency band, a GLONASS frequency band, and a GALILEO frequency band.
